# EUROPÄISCHE PATENTSCHRIFT

(11) **EP 1 213 119 B1**
(45) Veröffentlichungstag und Bekanntmachung des Hinweises auf die Patenterteilung: **03.08.2005**
(21) Anmeldenummer: 01128772.9
(22) Anmeldetag: 03.12.2001
(51) Int. Cl.: C08J 5/12, B29C 44/06, B32B 31/12

(54) **Kunststoffschaumplatten grosser Dicke**
Thick plastic foam panels
Panneaux en mousse d'épaisseur élevée

(30) Priorität: 09.02.2001 DE 10106341; 08.12.2000 DE 10061465; 16.05.2001 DE 10124061
(43) Veröffentlichungstag der Anmeldung: 12.06.2002
(73) Patentinhaber: Gefinex Jackon GMBH, 29416 Mechau (DE)
(72) Erfinder: Willetal, Jürgen, 29462 Wustrow (DE); Schulze, Ulfried, 29416 Klein Gartz (DE); Plate, Mark, 29410 Salzwedel (DE)
(74) Vertreter: Kaewert, Klaus

(56) Entgegenhaltungen:
- GB-A- 1 461 631
- GB-A- 2 247 990
- US-A- 3 344 222
- US-A- 3 658 615
- US-A- 4 661 188

## Beschreibung

Die Erfindung betrifft eine extrudierte thermoplastische Kunststoffschaumplatte großer Dicke, insbesondere Polystyrolschaumplatten.
Neue Energiesparverordnungen verlangen vom Bauherrn immer bessere Wärmedämmungen. Aufgrund der begrenzten Verfügbarkeit der nicht erneuerbaren Energieträger (Kohle, Gas, Erdöl) sind alle Verbraucher angewiesen, Energie zu sparen. Dies kann im starken Maße durch eine bessere Hausisolierung geschehen. Vor dem Hintergrund sind in der Vergangenheit Kunststoffschaumplatten mit einer Dicke von mehr als 100 mm, sogar mit einer Dicke von 200mm und mehr entstanden. Das ist mit den HFCKW-haltigen Treibmitteln für Extruderschaumplatten ohne weiteres möglich. Die HFCKW-haltigen Treibmittel werden jedoch wegen ihrer schädigenden Wirkung auf die Ozonschicht durch alternative Treibmittel ersetzt.
Mit dem Einsatz von alternativen Treibmitteln haben sich bei der Herstellung dieser Kunststoffschaumplatten erhebliche Schwierigkeiten ergeben. Ab einer Dicke von 60/70 mm nehmen diese Schwierigkeiten stark zu.
Außerdem verschlechtern sich die Isoliereigenschaften mit dem Einsatz der meisten alternativen Treibmittel beim Extrudieren von Dämmplatten. Im folgenden wird das an Polystyrolschaumplatten (XPS) erläutert.
Die Isoliereigenschaft des XPS hängt sehr stark von der Zellstruktur des Schaums ab. Diese wird auch bestimmt durch das Verhältnis von Dämmstoffdicke zu Düsenspalt. Zugleich muß durch Verengung des Düsenspaltes ein notwendiger Schmelzedruck vor dem Düsenspalt aufgebaut werden. Das zwingt zur Einhaltung bestimmter Düsenspaltgrenzen.Das heißt, der Düsenspalt kann nicht beliebig weit geöffnet werden, da mit seiner Hilfe der Druck in der Düse erzeugt wird, durch den gewährleistet wird, daß das Treibmittel nicht bereits in der Düse zum Aufschäumen der Schmelze führt.
Bei größer werdender Plattendicke ergibt sich dadurch eine Vergrößerung des Verhältnisses von Dämmstoffdicke zu Düsenspalt. Je größer dieses Verhältnis wird, um so schlechter wird die Zellstruktur und umso schwieriger ist die Herstellung eines Schaumes mit guten Isoliereigenschaften.
In der Vergangenheit ist mit der DE 4421016 A1 vorgeschlagen worden, die oben erläuterten Schwierigkeiten durch Herstellung von Platten mit sicher erreichbarer Dicke und Doppelung der Platten zu überwinden. Dabei war eine thermische Verbindung zwischen den Platten vorgesehen. Eine Bearbeitung der Platten an den Berührungsflächen war nicht vorgesehen. Dieser Vorschlag wurde aber nicht umgesetzt, da beim Verschweißen durch thermisches Anschmelzen der Oberflächen von zwei Platten an der Schweißnaht eine Sperrschicht gegen Wasserdampfdiffusion entsteht und diese für die meisten Anwendungen des XPS als Wärmedämmstoff im Bauwesen erhalten bleiben muß. Die Sperrschicht wird durch die Extrusionshäute an den Berührungsflächen der Platten und die aus der thermischen Verbindung entstehende zusätzliche Verhautung gebildet.
Es ist auch bekannt, extrudierte Platten miteinander zu verkleben. Dabei besteht gleichfalls eine Sperrschicht zwischen den miteinander verbundenen Platten. Die Sperrschicht besteht wiederum aus den Extrusionshäuten, zusätzlich aus der Kleberschicht.

Seit Jahren bemüht sich die Fachwelt um eine ausreichende Produktqualität von XPS-Platten. Auch die Erfindung hat sich diese Aufgabe gestellt. Dabei wendet sich die Erfindung der nicht aufgenommenen Technik der Doppelung zu. Dem liegt die Erkenntnis zugrunde, daß die bisherigen Negativ-Erfahrungen durch die Sperrschicht zwischen den miteinander verbundenen Platten begründet sind.

Nach der Erfindung wird eine Diffusionsfähigkeit zwischen mindestens zwei Polystyrolschaumplatten hergestellt, indem
a) extrudierte Ausgangsplatten verwendet werden, die spätestens unmittelbar vor der Verbindung an der Berührungsfläche durch Bearbeitung von der Extrusionshaut befreit werden und
b) die thermoplastischen Polystyrolschaumplatte durch Quellschweißung verbunden werden..

Die Quellschweißung von Polystyrolschaumplatten ist nicht naheliegend, weil thermoplastische Platten durch thermischen Verschweißung, miteinander verbunden werden können. Bei dem erfindungsgemäß vorgesehenen Quellschweißen werden die Schweißflächen mit Hilfe eines Lösungsmittels angelöst, jedoch nicht aufgelöst. Das richtige Maß der Lösungsmittelzugabe und der Einwirkungsdauer kann vor der serienmäßigen Anwendung mit wenigen Versuchen sehr genau bestimmt werden.

Die Verbindung kann durch Andrücken der zu verbindenden Platten unterstützt werden. Teilweise ist es ausreichend, wenn nur eine Seite der Schweißverbindung angelöst wird.

Als Lösungsmittel kommen organische Lösungsmittel mit einem Siedepunkt unter 150 Grad Celsius in Betracht. Es kommen auch Gemische verschiedener Lösungsmittel und Gemische mit Wasser in Betracht. Dabei kann die Anzahlung der Mischungskompenenten auh größer 2 sein.
Bewährt hat sich in Versuchen ein Gemisch aus Aceton und Wasser. Der Wasseranteil lag bei 10Vol% bezogen auf die gesamte Lösungsmittelmenge. In anderen Beispielen liegt der Wasseranteil zwischen 2 bis 30 Vol%.

Das Quellschweißen kann auch als chemisches Verschweißen bezeichnet werden.
Der Prozeß kann wie folgt beschrieben werden.
1. die Lösungsmittelmolekküle dringen zwischen die Polymerketten.
2. Dadurch bekommen die Polymerketten mehr Bewegungsfreiheit(vergleichbar mit dem geschmolzenen Polymer)
3. Die Polymerketten der einen Platten können so zwischen die Polymerketten der zweiten Platte eindringen.
4. Nach dem Wegdiffundieren der Lösungsmittelelmoleküle verhaarken die Polymerketten der einen Platte mit den Polymerketten der zweiten Platte.
Die Wasserdampfdiffusion wird durch aus der erfindungsgemäßen Verschweißung entstehenden Grenzschicht nicht wesentlich bis gar nicht behindert.

In diesem Prozeß ist eine Vorbereitung/Anpassung der zu verbindenden Platten Voraussetzung. Die Ausgangsplatten werden dazu bearbeitet
a) an den Berührungsflächen und den gegenüberliegenden Schweißflächen oder
b) einseitig an den Berührungsflächen und durch zusätzliche Maßnahmen, welche die sich ergebende Plattenkrümmung verhindern oder kompensieren.
Die Anpassung der Schweißflächen vor dem Verbinden der Platten verhindert, daß an der Verbindungsstelle Hohlräume oder Kanäle entstehen, so daß eine 100%ige Verbindungsfläche entsteht und sich deshalb kein Wasser in der Grenzschicht einlagern kann. Das Wasser würde die Isoliereigenschaften des Dämmstoffes herabsetzen.
Wenn eine gleichmäßige Bearbeitung an beiden gegenüberliegenden Flächen der Ausgangsplatten erfolgt, wird eine Plattenkrümmung verhindert.
Die Plattenkrümmung kann bei nur einseitiger Bearbeitung der Ausgangsplatten auch durch Wärmebehandlung der nicht bearbeiteten, gegenüberliegenden Fläche ausgeglichen werden. Denkbar ist auch eine Verbindung der Ausgangsplatten mit ausreichendem Druck, der eine Krümmung aufhebt. Nach der Verbindung halten sich die einseitig bearbeiteten Ausgangsplatten insbesondere bei gleicher Dicke gegenseitig in der gewünschten ebenen Form.

Eine Plattenkrümmung läßt sich auch verhindern, indem zwei extrudierte Schaumstränge einseitig an den Berührungsflächen im erfindungsgemäßen Sinne oberflächenbearbeitet werden und anschließend, vorzugsweise sofort miteinander verbunden werden. Aufgrund ihrer Länge legen sich die Schaumstränge leicht aneinander an und kann ein ebener Verlauf der Stränge gewahrt werden.
Nach ihrer erfindungsgemäßen Verbindung werden die Schaumstränge zu den gewünschten Platten abgelängt.

Durch die Oberflächen-Bearbeitung werden je nach Qualität der Ausgangsplatten 1 bis 10 mm der Plattendicke entfernt.

Als Bearbeitung eignet sich zum Beispiel ein Schneiden durch Fräsen, Hobeln, Schneiden oder Sägen.

Durch die Bearbeitung werden vorzugsweise plane Schweißflächen erzeugt. Es können aber auch gekrümmt verlaufende Schweißflächen erzeugt werden.

Zum Auftragen von Lösungsmittel eignen sich Walzen oder Düsen, aus denen das Lösungsmittel gesprüht wird. Mit den Walzen läßt sich jede gewünschte Verteilung (sowohl hinsichtlich der flächenmäßigen Ausdehnung als auch hinsichtlich der Dicke des Auftrages) des Lösungsmittels auf die Berührungsflächen herbeiführen. Der Auftrag kann dabei wie ein Farbauftrag gehandhabt werden. In dem Sinne sind anstelle der Walzen auch Auftragsplatten nach dem Vorbild von Druckplatten geeignet.

Wahlweise ist zusätzlich zur Quellschweißung eine mechanische Verbindung der Platten vorgesehen. Die aneinander liegenden bzw. sich berührenden Platten werden durch mechanische Verbindung aneinander gehalten.

Die mechanische Verbindung wird durch Verbindungselemente bewirkt, die an den Plattenseiten in die Platten greifen und/oder die Platten umgreifen. Diese Verbindung kann punktförmig und/oder linienförmig und/oder flächenweise erfolgen. Die Befestigungsmöglichen mit Verbindungselementen können den Verbindungsmöglichkeiten mit dem Quellschweißen nachgebildet werden und umgekehrt.

Die Befestigungspunkte haben eine der flächigen Ausdehnung der Befestigungselemente entsprechende Ausdehnung. Die Bezeichnung als Punkte entspricht der Fachsprache, obwohl es sich um Flächen handelt.
Vorzugsweise sind die Befestigungspunkte gleichmäßig über der Berührungsfläche verteilt. Wahlweise verteilen sich die Befestigungspunkte auch entsprechend der Verteilung der Zugkräfte in den Platten. Die erwarteten Zugkräfte resultieren aus der Belastung der Platten und/oder aus den belastungsunabhängigen Plattenverformungen.

Die Befestigungslinien haben eine der flächigen Ausdehnung der Befestigungselemente entsprechende Ausdehnung. Die Bezeichnung als Linien entspricht der Fachsprache, obwohl es sich um Flächen handelt.
Die linienförmige Befestigung kann geradlinig und/oder gekrümmt verlaufen. Vorzugsweise verlaufen die Befestigungslinien geradlinig und quer über die gesamte Berührungsfläche. Die Befestigungslinien können entsprechend den oben beschriebenen Befestigungspunkte verteilt sein.
Für die Verteilung der Befestigungslinien gilt das gleiche wie für die Verteilung der Befestigungspunkte.

Wahlweise haben die Verbindungselemente die Form von Ankern. Dabei finden sich an den Verbindungselementen verdickte Stellen, die den Verbindungselementen die notwendige Ausreißfestigkeit im Schaum geben.

Die Ausreißfestigkeit kann auch auf andere Weise als durch Verdickung erzielt werden. Z.B. besitzen verschiedene gegensätzlich geneigte Verbindungselemente aufgrund ihrer gegensätzlichen Neigung bereits eine vorteilhafte Ausreißfestigkeit.
Vorzugsweise finden lang gestreckte, auf ihrer Länge unprofilierte Verbindungselemente für die Verbindungsvariante mit gegensätzlicher Neigung Anwendung. Dabei können die Verbindungselemente aus durch Ablängen einfacher Profilstränge oder durch Ausschneiden aus Platten gewonnen werden.
Wahlweise werden die Verbindungselemente außerdem in den Platten verklebt oder verschweißt. Das erhöht die Ausreißfestigkeit.
Für die Verbindungselemente werden Ausnehmungen in die Platten eingearbeitet. Die Ausnehmungen werden den Verbindungselemente angepaßt oder umgekehrt.
Günstig ist die Verwendung von Fräsern für die Herstellung von Ausnehmungen. Geeignet sind sowohl Scheibenfräser als auch Fingerfräser und Stirnfräser.

Mit Fräsern kann seitlich in kürzester Zeit eine Ausnehmung hergestellt werden.
Die Fräserbewegung kann CNC-gesteuert oder mittels Schablonen gesteuert sein. Einfache Bewegungen lassen sich auch mit Endschaltern steuern.

Mit dem Fräser lassen sich auch flache Ausnehmungen für Verbindungselemente in den Schaum einarbeiten, in welche die Verbindungselemente seitlich eingelegt werden. Hier kann die Form der Verbindungselemente und der Ausnehmungen noch weiter variieren. Wahlweise werden sogar seitliche Formen mit seitlichen Kurven und/oder Geraden mit solchen Formen zur Plattenmitte hin an den Verbindungselementen kombiniert.

Die verschiedenen Fräser haben in Bezug auf die Platte unterschiedliche Arbeitshaltungen, zum Teil aber auch charakterische Arbeitshaltungen. Der Fingerfräser kann unterschiedlich stehen. Der Scheibenfräser verläuft mit seiner Arbeitsebene/Richtung entsprechend den Ausnehmungen regelmäßig quer zur Plattenlängsrichtung und geneigt zur Plattenebene, gegebenenfalls auch geneigt zur Plattenlängsrichtung. Der Stirnfräser steht mit seiner Arbeitsrichtung wie der Scheibenfräser.

Neben der spanabhebenden Bearbeitung durch Fräser besteht die Möglichkeit Nutzen, Ausnehmungen usw. durch CNC gesteuerte Glühdratschneidetechnik herzustellen.

Wahlweise werden die Ausgangsplatten einzeln (vor Aufeinanderlegen) bearbeitet oder werden die Kunststoffschaumplatten mit aufeinander gelegten Ausgangsplatten bearbeitet.

Für die Verbindungselemente ist vorzugsweise der gleiche Kunststoff wie für die Ausgangsplatten vorgesehen, bei XPS-Platten also XPS. Durch unterschiedliche Extrusion können unterschiedliche Raumgewichte anfallen. Vorzugsweise soll das Raumgewicht der Verbindungselemente und der Platten nicht mehr als 20 kg pro Kubikmeter, besser nicht mehr als 5 kg pro Kubikmeter voneinander abweichen.

Die Verbindungselemente werden wahlweise nach seitlicher Bearbeitung der Platten eingesetzt. Dann ist eine ausreichende Maßhaltigkeit vorgesehen.
Wahlweise werden die Verbindungselemente nach der Bearbeitung eingesetzt. Dann ist ein Übermaß der Verbindungselemente vorgesehen, so daß die Verbindungselemente von der seitlichen Bearbeitung erfaßt werden.

Die Verbindung ist oben an zwei Ausgangsplatten beschrieben. Nach dem erfindungsgemäßen Verfahren lassen sich aber auch 3 und mehr Platten miteinander verbinden.

Das erfindungsgemäße Verbinden hat überraschender Weise noch weitere Vorteile, denn es reduziert sich die Anzahl der zu extrudierenden Dickenformate. Z.B. lassen sich aus 60iger Platten (die Zahl bezeichnet im folgenden die Dicke in mm) eine 120iger Platte oder eine 180iger Platte oder eine 240iger Platte herstellen; aus einer 50iger Platte eine 100eter Platte, eine 150iger Platte, eine 200eter Platte oder eine 250iger Platte. In den beschriebenen Fällen ergeben sich aus einem einzigen Dickenformat durch Doppelung/Verbindung bereits drei bzw. vier weitere handelsübliche Dickenformate. Es können auch unterschiedlich dicke Platten miteinander kombiniert werden, z.B. 50iger und 60iger Platen oder 40iger und 50iger Platten, wenn keine Gefahr eine Plattenkrümmung verursacht wird.
Vorzugsweise beschränkt sich in dem Sinne die erfindungsgemäße Herstellung auf die Verwendung 30iger bis 70iger Platten. Noch weiter bevorzugt beschränkt sich die Plattenherstellung auf die Verwendung von 40iger, 50iger und 60iger Ausgangsplatten. Bis zu der 60iger Plattendicke lassen sich zudem noch bessere Lambdawerte zuverlässig erreichen. Dadurch ergibt sich an der erfindungsgemäß hergestellten Platte noch eine weitere Verbesserung.

Vorzugsweise entsteht durch die erfindungsgemäße Verbindung eine neue Platte mit einer Mindestdicke von 70 mm.

Wahlweise werden zur Herstellung von Platten mit Nut und Feder drei Ausgangs-Platten im erfindungsgemäßen Sinne gedoppelt, wobei die mittlere Ausgangs-Platte gegenüber den beiden anderen Ausgangs-Platten(die in liegender Anordnung oben und unten liegen) so versetzt wird, daß sie an zwei Plattenseiten zurückspringt und eine Nut bildet und an den beiden Plattenseiten vorspringt und eine Feder bildet. So hergestellte Platten können schließend verlegt werden, wobei Federn der einen Platte in die Nuten angrenzender anderer Platten greifen.

Wahlweise werden zur Herstellung von Platten mit Stufenfalz zwei Ausgangs-Platten erfindungsgemäß gedoppelt, wobei die eine Ausgangs-Platte gegenüber der anderen Ausgangs-Platte versetzt ist. Das heißt, die eine Ausgangsplatte springt an zwei Seiten zurück und an den verbleibenden anderen Seiten vor. Dadurch können die entstandenen Platten gleichfalls schließend verlegt werden, indem sich die Platte an allen Seiten mit dem Stufenfalz der angrenzenden anderen Platten überlappt.

Bei der Herstellung von Nut und Feder bzw. Herstellung von Stufenfalz mit der erfindungsgemäßen Dopplung ergibt sich zusätzlich eine Einsparung an Schaum, weil die herkömmliche Konfektionierung des Schaumstranges ein Ausfräsen von Nut/Feder und Stufenfalz vorsieht, verbunden mit einem entsprechend hohen Verzehr des Schaumstrangrandes.

Die erfindungsgemäße Verbindung kann auf verschiedene Kunststoffe Anwendung finden. Dazu gehören Polystyrol, Polyethylen, Polypropylen, Ehtylen und Propylencopolymere.

Verschiedene Ausführungsbeispiele der Erfindung sind nachfolgend beschrieben.

Ausgangsplatten für das Ausführungsbeispiel sind herkömmlich hergestellte Polystyrolschaum-Platten mit einem Raumgewicht von 30 bis 45 kg pro Kubikmeter. Dabei ist im Ausführungsbeispiel zunächst mittels einer Tandem-Extrusionsanlage ein Endlos-Schaumstrang erzeugt worden. Die Tandem-Extrusionsanlage besteht aus einem Primärextruder und einem Sekundärextruder. In dem Primärextruder wird das Kunststoffgranulat mit den üblichen verschiedenen Additiven und Verarbeitungshilfen aufgeschmolzen und zu einer homogenen Schmelze vermischt. Die entstehende Schmelze wird mit Kohlendioxid als Treibmittel versetzt und das Gemisch auf dem weiteren Weg durch den Extruder weiter homogenisiert. Daran schließt sich eine Abkühlung der Schmelze auf Extrusionstemperatur im Sekundärextruder.
Im Sekundärextruder herrscht ein erheblicher Druck. Beim Austragen der Schmelze durch die Düse des Extruders findet eine Entspannung der Schmelze statt. Infolgedessen expandiert das Treibmittel und bildet in der Schmelze entsprechend seiner feinen Verteilung eine Vielzahl gleichmäßig verteilter Blasen/Zellen.

In einem anderen Ausführungsbeispiel wird der anstelle einer Tandemanlage eine Extrusionsanlage mit einem einzigen Extruder eingesetzt. Es kann sich um Extruder verschiedener Bauart handelt, z.B. Einschneckenextruder oder Doppelschneckenextruder.

Die Schmelze wird in einen sogenannten Kalibrator geschäumt. Es handelt sich um Metallplatten, welche dem entstehenden Schaumstrang seine Dicke geben.
Nach ausreichender Abkühlung wird der entstehende Schaumstrang an einer Seite oder an beiden Flachseiten durch Oberflächenbearbeitung von der Extrusionshaut befreit. Das kann inline mit der Schaumherstellung oder nach Ablängen des Schaumstranges zu Platten ohne vorhergehende Oberflächenbearbeitung erfolgen. Es können auch Platten verwendet werden, die in bekannter Weise aus einem Schaumstrang abgelängt werden, der vor dem Ablängen an beiden gegenüberliegenden Flachseiten bearbeitet worden ist. Die bearbeiteten und abgelängten Platten können ohne Zwischenlagerung oder nach vorheriger Lagerung weiterverwendet werden, d.h. in erfindungsgemäßer Weise verbunden werden.

Die Oberflächenbearbeitung erfolgt im Ausführungsbeispiel mittels Fräsen. In anderen Ausführungsbeispielen kann eine andere Oberflächenbearbeitung Anwendung finden.

Die Oberflächenbearbeitung nur einer Flachseite und inline findet vorzugsweise Anwendung, wenn parallel ein gleicher Schaumstrang hergestellt und an der Oberfläche bearbeitet wird, so daß diese Schaumstränge miteinander verbunden werden können.

Im Ausführungsbeispiel werden Platten, die in der oben beschriebenen bekannten Weise bearbeitet und zwischengelagert worden sind, in einer Station nebeneinander und hintereinander auf einen Rollgang (bestehend aus hintereinander angeordneten Rollen) gelegt, so daß sie zwei nebeneinander und aneinanderliegende Plattenstränge bilden. Diese Plattenstränge werden auf dem Rollgang in eine andere Station geschoben. Dort wird einer der Stränge an der Verbindungsfläche der Ausgangsplatten von oben mit Lösungsmittel besprüht. In anderen Ausführungsbeispielen werden beide Stränge mit Lösungsmittel besprüht.

Im ersten beschriebenen Ausführungsbeispiel gelangen die Ausgangsplatten nach dem Lösungsmittelauftrag in eine dritte Station, in der die Ausgangsplatten auf dem Rollgang aufgerichtet und gegeneinander gedrückt werden. Zugleich findet eine Zentrierung der Ausgangsplatten aufeinander bzw. ein gewünschter Versatz der Ausgangsplatten gegeneinander statt.

In einer vierten Station werden die entstandenen neuen Platten abgelegt bzw. gestapelt.

In einem weiteren nicht dargestellten Ausführungsbeispiel wird ein einziger Strang aus hintereinander liegenden Ausgangsplatten auf einem Rollgang oder einem Transportband erzeugt und mit Lösungsmittelauftrag versehen. Die zu verbindenen weiteren Ausgangsplatten werden von Hand oder maschinell von einem Stapel genommen und auf den auf dem Rollgang oder dem Transportband liegenden Ausgangsplatten positioniert.
Für die maschinelle Handhabung der Ausgansplatten eignet sich auch ein Roboter. Der Roboter kann mit einem Greifwerkzeug und/oder einer Vakuumansaugung arbeiten. Die Vakuumansaugung wird auch bei rauher Oberfläche der Ausgangsplatten möglich, wenn die Ansaugköpfe/Flächen sich mit einer breitflächigen und weichen/anschmiegsamen/elastischen Dichtung an die Ausgangsplatten anlegen.

Die erfindungsgemäße Verbindung der Ausgangsplatten kann in einem anderen Ausführungsbeispiel auch ohne Rollgang oder Transportband mittels eines Roboters erfolgen, indem der Roboter zunächst eine nach dem oben beschriebenen bekannten Verfahren bearbeitete Ausgangsplatte von einem Stapel nimmt, vor einer ortsfesten Düse oder über eine ortsfest angeordnete Walze bewegt und anschließend mit der Seite, auf der sich der sich das Lösungsmittel befindet, auf den Stapel zurücklegt bzw. auf die oben liegende Platte im Stapel drückt. Dadurch entsteht eine Verbindung von zwei Ausgangsplatten zu einer neuen Platte. Die neuen Platten können dann von dem Roboter auf einem anderen Stapel abgelegt werden. Vorteilhafterweise kann der Roboter die Ausgangsplatten beim Verbinden so positionieren, daß nach Wunsch entweder neue Platten mit Nut und Feder oder neue Platten mit Stufenfalz entstehen.

Wahlweise können auch zwei Roboter zusammenarbeiten, indem jeder Roboter eine oben beschriebene, bearbeitete Ausgangsplatte von einem Stapel nimmt. Nach Wunsch können beide Roboter für einen Lösungsmittelauftrag an ihrer Ausgangsplatte tätig werden. Wahlweise erhält aber auch nur eine der beiden zu verbindenden Ausgangsplatten einen Lösungsmittelauftrag.
Die Verbindung erfolgt dann dadurch, daß jeder Roboter seine Ausgangsplatte gegen die Ausgangsplatte des anderen Roboters drückt. Danach ist vorgesehen, daß einer der Roboter seine Ausgangsplatte frei gibt und daß der andere Roboter die entstandene neue Platte auf einen Stapel ablegt.

In einem anderen Ausführungsbeispiel wird ein Roboter mit einem Tisch zusammen, indem eine oben beschriebene Ausgangsplatte auf dem Tisch abgelegt und dort aus einer bewegten Düse mit dem Lösungsmittelauftrag versehen wird und anschließend von dem Stapel eine zweite bearbeitete Ausgangsplatte genommen und auf die mit Lösungsmittelauftrag versehene Platte gedrückt wird.

Vorteilhafterweise können die Roboter in weiteren Ausführungsbeispielen eine Oberflächenbearbeitung an einer noch mit Extrusionshaut versehenen Platte oder Schaumstrang selbst vornehmen. Dann wird von den Robotern oder dem vorgesehenen einzelnen Roboter z.B. ein Fräswerkzeug bewegt. Alternativ kann auch eine abgelängte, noch mit Extrusionshaut versehene Platte auch mittels eines Roboters an einem ortsfesten Bearbeitungswerkzeug entlang geführt werden.
Mehrere Roboter können auch in der Weise zusammenarbeiten, daß der eine Roboter die noch mit einer Extrusionshaut versehene Ausgangsplatte hält und der andere Roboter das Bearbeitungswerkzeug führt. In gleicher Weise kann das Lösungsmittel aufgebracht werden.

In einer anderen Variante ist nur ein Roboter vorgesehen, der mit einem Tisch oder einem ortsfesten Spannfutter oder einer anderen Halteeinrichtung zusammenarbeitet, indem die noch mit einer Extrusionshaut versehene Ausgangsplatte mit der Halteeinrichtung gehalten wird, während der Roboter mit einem Bearbeitungswerkzeug die Extrusionshaut entfernt, anschließend mit einer Düse oder anderen Werkzeugen das Lösungsmittel aufträgt und eine Verbindung mit einer zweiten bearbeiteten Ausgangsplatte herbeiführt.
Wahlweise können dabei statt eines Roboters auch zwei Roboter Anwendung finden.
Als sonstige Werkzeuge können Walzen, Streicheinrichtungen, auch Platten dienen.

Für die einseitige Bearbeitung einer Ausgangsplatte ist es von Vorteil, wenn der Roboter bzw. die Halteeinrichtung zugleich eine Krümmung der einseitig bearbeiteten Platte verhindert. Dafür eignen sich Ansaugplatten und bzw. Halteinrichtungen mit mehreren Ansaugköpfen, welche die Ausgangsplatten am Rand und mittig so belasten, daß Biegekräfte in der Ausgangsplatte auftreten, welche die Spannungen kompensieren, die sonst zu einer Krümmung der Ausgangsplatten führen können.

Die beschriebenen Roboter sind auch von Vorteil, weil sich mit Ihnen Dickentoleranzen vorgefertiger Ausgangsplatten leicht kompensieren lassen.
Zum Ausgleich von Dickentoleranzen kann auch der oben beschriebene Tisch in besonderer Weise ausgerüstet werden, z.B. durch eine nachgiebige Anordnung oder eine nachgiebige Ausbildung.

Zwei übereinander liegenden Ausgansplatten werden durch Verbindungselemente miteinander verbunden. Dabei verlaufen je zwei benachbarte Verbindungselemente unter 45 Grad geneigt zueinander. Bei einer Plattendicke von 50 mm haben die Verbindungselemente eine Länge von 60mm und eine Dicke von 35 mm. Die Verbindungselemente besitzen die Form von langen Streifen in den Abmaßen 60mm x 35 mm x Länge der zu verbindenden Platten.

In weiteren Ausführungsbeispielen beträgt die Dicke der Ausgangsplatten 40 oder 60 mm, die Dicke der Verbindungselemente 20 bis 50 mm und die Länge der Verbindungselemente 40 bis 80 mm, die Länge der Verbindungselemente ist gleich der Plattenlänge.

Die Verbindungselemente sind aus dem gleichen Material wie die Ausgangsplatten 10 und 20 gefertigt, XPS.

Im Ausführungsbeispiel sind die Verbindungselemente aus 35 mm dicken XPS-Platten geschnitten. Zum Ausschneiden ist eine Säge verwendet worden, in anderen Ausführungsbeispielen werden Stanzen oder Fräser verwendet.

Die zu den Verbindungselementen gehörenden Ausnehmungen in den Platten sind mit einem Scheibenfräser erzeugt worden, der den gleichen Radius wie die Verbindungselemente an deren Auswölbung hat, nämlich 30 mm.
Mit dem Scheibenfräser können die Ausnehmungen extrem schnell eingearbeitet werden. Das ist vor allem für eine Bearbeitung von Platten von Vorteil, die auf einem Rollgang kontinuierlich bewegt werden. Dann ist vorgesehen, daß die Fräse sich ein kleines Stück mit den Platten mitbewegt. Je schneller die Ausnehmungen entsteht, desto geringer ist der notwendige Bewegungsraum dieser Arbeitsvariante.
In einer anderen Arbeitsvariante werden die Platten vereinzelt und für kurze Zeit zur Einarbeitung der Ausnehmungen festgehalten. Je kürzer die Bearbeitungszeit ist, desto besser wird der Arbeitsfluß mit den Platten.

Bei der mechanischen Verbindung der Platten über die gesamte Plattenlänge und -breite werden die Platten inline kontinuierlich mit einer Nute versehen dadurch, daß die Platten mit Hilfe einer Rollenbahn unter einer Fräse hindurch geführt wird, wobei die Nutzen eingefräst werden.

Im Ausführungsbeispiel entstehen die Platten dadurch, daß zunächst (über eine gewisse Arbeitsdauer) kontinulierlich zwei XPS-Stränge mittels zweier Extruder erzeugt und nach ausreichender Abkühlung übereinander gefahren werden. Diese XPS-Stränge besitzen zunächst allseitig eine Extrusionshaut. Bevor die Stränge miteinander in Berührung reten werden die XPS-Stränge an der Berührungsfläche durch Fräsen von der Extrusionshaut befreit.
Anschließend kommen die XPS-Stränge aneinander zur Anlage. Dabei verhindert das Stranggewicht ein Schüsseln der XPS-Stränge. Darüber hinaus werden beide Stränge zwischen zwei Fördereinrichtungen, im Ausführungsbeispiel zwei Rollengänge, gehalten. Die oberen Rollen sind dabei verstellbar und/oder nachgiebig angeordnet, um Dickentoleranzen und Formatänderungen Rechnung tragen zu können. Auch der obere Rollengang wirkt dem Schüsseln entgegen.

Im Ausführungsbeispiel erfolgt die Einarbeitung der Ausnehmungen und das anschließende Einfügen der Verbindungselemente unmittelbar nach Aufeinanderliegen der XPS-Stränge. Im Ausführungsbeispiel werden die Verbindungselemente eingeklebt. Dazu ist eine geringe Lösungsmittelmenge ausreichend, weil sich das Lösungsmittel durch den Druck beim Einfügen gut verteilt.
Nach der Verbindung der XPS-Stränge werden diese an den Seiten bearbeitet und abgelängt. Dadurch entstehen die Platten. Die Verbindungselemente sind in der entstehenden Schnittfläche kaum erkennbar, weil sie bündig abschließen und die gleiche Struktur wie die Platten besitzen.

Zur Einarbeitung der Ausnehmungen sind Scheibenfräser vorgesehen, die auf beweglichen Schlitten schwenkbeweglich gehalten werden können. Die Schwenkebene liegt parallel zur Fräsebene. D.h. der Fräser tritt durch Schwenken in Funktion. Dabei beschränkt sich sein Tätigwerden auf ein Eintauchen in den Kunststoffschaum und die anschließende Zurückbewegung. Während dieses Vorganges wird der Fräser auf dem Schlitten mit den Platten mitbewegt.
Im Ausführungsbeispiel sind auf einem Schlitten jeweils zwei Scheibenfräser vorgesehen, die in obigem Sinne geneigt angeordnet sind. Beide Scheibenfräser werden gleichzeitig in Funktion gebracht, so daß mit jedem Arbeitsgang zwei nebeneinander und geneigt zueinander liegende Ausnehmungen entstehen.
In anderen Ausführungsbeispielen werden noch mehr Fräser oder nur ein Fräser in Tätigkeit gebracht. Die verschiedenen Fräser können über einen gemeinsamen Antrieb gekoppelt sein oder auch nur eine gemeinsame Steuerung besitzen.
Ein einziger Fräser an einer Plattenseite kann die unterschiedlich geneigten Ausnehmungen erzeugen, wenn sein Fräskopf noch eine weitere Schwenkbeweglichkeit besitzt.

Die nach Ablängen der XPS-Stränge entstandenen Platten besitzen an den Schnittflächen keine Verbindungselemente. In einem anderen Ausführungsbeispiel werden in einem zusätzlichen Arbeitsschritt dort weitere Verbindungselemente gesetzt.

## Patentansprüche

1. Verfahren zur Verbindung von mindestens zwei Ausgangsplatten aus thermoplastischen Kunststoffschaum zu einer neuen Platte, insbesondere von alternativ bzw. HFCKW-frei getriebenen Kunstschaumplatten als Ausgangsplatten zu neuen Platten mit einer Mindestdicke von 70 mm, insbesondere auch Polystyrolschaumplatten, **dadurch gekennzeichnet, daß**
a) Ausgangsplatten verwendet werden, die an der Berührungsfläche extrusionshautlos sind und
b) eine Verbindung der Ausgangsplatten durch Quellschweißen erfolgt

2. Verfahren nach Anspruch 1, **gekennzeichnet durch** die Verwendung von organischen Lösungsmitteln zum Quellschweißen mit einem Siedepunkt kleiner 150 Grad Celsius für das Quellschweißen

3. Verfahren nach Anspruch 1 oder 2, **gekennzeichnet durch** die Verwendung von Aceton als Lösungsmittel.

4. Verfahren nach einem der Ansprüche 1 bis 3, **gekennzeichnet durch** Lösungsmittelgemische.

5. Verfahren nach Anspruch 4, **gekennzeichnet durch** die Verwendung eines Gemisches mit Wasser.

6. Verfahren nach einem der Ansprüche 1 bis 5, **gekennzeichnet durch** Aufsprühen des Lösungsmittels oder **durch** die Verwendung von Walzen oder Platten zum Aufdruck des Lösungsmittels.

7. Verfahren nach Anspruch 6, **gekennzeichnet durch** eine zusätzliche mechanische Verbindung der Platten.

8. Verfahren nach einem der Ansprüche 1 bis 7, **dadurch gekennzeichnet, daß** Ausgangsplatten verwendet werden, die einander angepaßten Schweißflächen plan oder gekrümmt verlaufen, wobei die Anpassung der Schweißflächen
a) durch mechanische Bearbeitung und/oder
b) durch Wärmebehandlung und/oder
c) durch Druck und/oder Biegung der korrespondierenden anderen Ausgangsplattenfläche erzeugt wird.

9. Verfahren nach einem der Ansprüche 1 bis 8, **dadurch gekennzeichnet, daß** die Platten an den mit Lösungsmittel angelösten Schweißflächen gegeneinander gedrückt werden.

10. Verfahren nach einem der Ansprüche 1 bis 9, **dadurch gekennzeichnet, daß** extrudierte Schaumstoffstränge miteinander verschweißt werden, so daß ein neuer Strang entsteht, der zu Platten abgelängt wird.

11. Verfahren nach einem der Ansprüche 1 bis 10, **gekennzeichnet durch** eine Oberflächenbearbeitung der Ausgangsplatten mittels Fräsen oder Hobeln oder Schneiden oder Sägen.

12. Verfahren nach einem der Ansprüche 1 bis 11, **gekennzeichnet durch** die Herstellung aller gewünschten neuen Platten **durch** Kombination von Ausgangsplatten mit einer Dicke von 30 bis 70 mm, vorzugsweise **durch** Kombination von 40iger Ausgangsplatten und 50iger Ausgangsplatten und 60iger Ausgangsplatten.

13. Verfahren nach einem der Ansprüche 1 bis 12, **gekennzeichnet durch** Versetzen der Ausgangsplatten beim Verbinden zur Erzeugung von Nut und Feder bzw. eines Stufenfalzes an den neuen Platten.

14. Verfahren nach einem der Ansprüche 1 bis 13, **gekennzeichnet durch** einen Lösungsmittelauftrag der Ausgangsplatten,
a) wobei die Ausgangsplatten in zwei nebeneinander liegenden Reihen hintereinander auf einem Rollgang oder Band liegen, und **gekennzeichnet durch** anschließendes Aufrichten der Ausgangsplatten und deren Zusammendrücken oder
b) wobei die Ausgangsplatten in einer Reihe hintereinander auf einem Rollgang oder einem Transportband oder auf einem Tisch aufliegen und für jede der Platten eine zweite Platte von einem Stapel genommen und auf die auf die zugehörende liegende Platte gedrückt wird oder
c) wobei eine Ausgangsplatte von einem Stapel genommen und nach dem Lösungsmittelauftrag mit klebenden Seite auf den Stapel zurückgelegt und gedrückt wird und die entstehende neue Platte auf einen neuen Stapel gelegt wird oder
d) wobei gleichzeitig zwei Ausgangsplatten von einem Stapel oder von zwei Stapeln genommen und mit einem Lösungsmittelauftrag versehen und miteinander verbunden werden.

15. Verfahren nach einem der Ansprüche 1 bis 14, **dadurch gekennzeichnet, daß**
a) Ausgangsplatten verwendet werden, deren Extrusionshaut an beiden gegenüberliegenden Flachseiten entfernt ist oder
b) Ausgangsplatten mit Extrusionshaut verwendet werden, deren Extrusionshaut an einer Flachseite entfernt wird oder
a) Ausgangsplatten in Form von zwei Schaumsträngen verwendet werden, deren Extrusionshaut an einer Flachseite entfernt wird und die anschließend mit einem Lösungsmittelauftrag versehen und miteinander verbunden und danach abgelängt werden oder
b) Ausgangsplatten in Form eines Schaumstranges verwendet werden, dessen Extrusionshaut an einer Flachseite entfernt wird und dort anschließend mit einem Lösungsmittelauftrag versehen und mit vorbereiteten anderen Platten verbunden wird oder.

16. Verfahren nach Anspruch 15, **dadurch gekennzeichnet, daß** Ausgangsplatten beim Entfernen einer Schaumhaut gehalten und gegen Krümmung geschützt werden.

17. Verfahren nach Anspruch 16, **dadurch gekennzeichnet, daß** abgelängte Ausgangsplatten von einem Stapel genommen werden und/oder neue Platten auf einem Stapel abgelegt werden.

18. Verfahren nach einem der Ansprüche 1 bis 17, **gekennzeichnet durch** die Verwendung eines oder mehrerer Roboters zur Plattenbewegung und/oder **durch** die Verwendung eines Tisches oder eines Spannfutters als Halteeinrichtung für die Ausgangsplatten.

19. Verfahren nach Anspruch 18, **gekennzeichnet durch** Vakuumplatten bzw. Saugnäpfe als Halteeinrichtungen für die Ausgangsplatten.

20. Verfahren nach einem der Ansprüche 1 bis 19, **gekennzeichnet durch** die Verwendung ortsfester Lösunsgmitteläuftragvorrichtungen und/oder ortsfester Oberflächenbearbeitungswerkzeuge bei Einsatz eines Roboters für die Plattenbewegung.

21. Verfahren nach einem der Ansprüche 1 bis 20, **gekennzeichnet durch** eine Werkzeugbewegung mittels Roboter.

22. Verfahren nach einem der Ansprüche 1 bis 21, **gekennzeichnet durch** Verwendung von Verbindungselementen, die zwei oder mehr Kunststoffschaumplatten zusätzlich mechanisch miteinander verbunden werden.

23. Verfahren nach Anspruch 1, **gekennzeichnet durch** punktförmige und/oder linienförmige und/flächenweise zusätzliche Verbindung der Platten.

24. Verfahren nach Anspruch 22 oder 23, **dadurch gekennzeichnet, daß** in die Kunststoffschaumplatten bzw. in die Ausgangsplatten Ausnehmungen eingearbeitet werden, in welche die Verbindungselemente eingreifen und/oder daß die Verbindungselemente die Platten umgreifen.

25. Verfahren nach Anspruch 24, **dadurch gekennzeichnet, daß** Ausnehmungen über die gesamte Breite und/oder Länge der Platten eingearbeitet werden.

26. Verfahren nach einem der Ansprüche 22 bis 25, **gekennzeichnet durch** Verwendung von langgestreckten Verbindungselementen mit zu den Kunststoffschaumplatten geneigter Anordnung oder querer Anordnung.

27. Verfahren nach einem der Ansprüche 22 bis 26, **gekennzeichnet durch** Verwendung stabförmiger oder plattenförmiger oder scheibenförmiger Verbindungselemente.

28. Verfahren nach einem der Ansprülche 22 bis 26, **gekennzeichnet durch** Verwendung von Verbindungselementen, die in der Draufsicht einen Kreisabschnitt zeigen.

29. Verfahren nach einem der Ansprüche 22 bis 26, **gekennzeichnet durch** Verwendung von Verbindungselementen, die in der Draufsicht eine Fläche mit unterschiedlicher Randkrümmung und/oder geradem Randverlauf und/oder einen teilweise gekrümmten und teilweise geraden Randverlauf zeigen.

30. Verfahren nach einem der Ansprüche 22 bis 29, **dadurch gekennzeichnet, daß** die Ausnehmungen für die Verbindungselemente in die aufeinanderliegenden Ausgangsplatten oder einzeln in die Ausgangsplatten eingearbeitet werden.

31. Verfahren nach einem der Ansprüche 22 bis 30, **dadurch gekennzeichnet, daß** die Ausnehmungen mit einem Scheibenfräser oder Stirnfräser oder Fingerfräser eingearbeitet werden, wobei die Arbeitsrichtung des Fräsers wie die Verbindungselemente verläuft.

32. Verfahren nach einem der Ansprüche 31, **dadurch gekennzeichnet, daß** ein Scheibenfräser verwendet wird, der einen Radius besitzt, der gleich dem Radius des Kreisabschnittes ist.

33. Verfahren nach einem der Ansprüche 22 bis 32, **dadurch gekennzeichnet, daß** ein Scheibenfräser verwendet wird, dessen Radius höchstens gleich der an dem Verbindungselement vorkommenden maximalen nach außen gerichteten Krümmung ist.

34. Verfahren nach einem der Ansprüche 22 bis 33, **gekennzeichnet durch** die Verwendung von EDV-gesteuerten oder schablonengesteuerten Fräsern.

35. Verfahren nach einem der Ansprüche 22 bis 34, **dadurch gekennzeichnet, daß** eine Klemmung der Verbindungselemente in den Ausnehmungen erzeugt wird.

36. Verfahren nach einem der Ansprüche 22 bis 35, **dadurch gekennzeichnet, daß** der - Fingerfräser bei einzeln liegenden Ausgangsplatten von der Berührungsfläche der Ausgangsplatten her in die Platte arbeitet.

37. Verfahren nach einem der Ansprüche 22 bis 36, **gekennzeichnet durch** Einkleben der Verbindungselemente und/oder die Verwendung von Verbindungselementen mit verdickten Enden.

38. Verfahren nach einem der Ansprüche 22 bis 37, **gekennzeichnet durch** die Verwendung von Verbindungselementen aus gleichem Kunststoffschaum, wobei das Raumgewicht der Ausgangsplatten und der Verbindungselemente nicht mehr als 20 kg pro Kubikmeter, vorzugsweise nicht mehr als 5 kg pro Kubikmeter voneinander abweicht.

39. Verfahren nach einem der Ansprüche 22 bis 38, **gekennzeichnet durch** die Einarbeitung von Ausnehmungen in die Plattenseiten, die vor der Oberseite oder Unterseite der liegenden Kunststoffschaumplatte enden.

40. Verfahren nach einem der Ansprüche 22 bis 39, **gekennzeichnet durch** die Einarbeitung von Ausnehmungen, deren Enden einen Abstand von mindestens 10 mm zur Oberseite bzw. Unterseite besitzen.

41. Verfahren nach einem der Ansprüche 22 bis 40, **dadurch gekennzeichnet, daß**
a) Extrudierte Platten als Ausgangsplatten Anwendung finden
b) Die Plattendicke 40 bis 60 mm beträgt
c) Die Verbindungselemente bei zwei übereinander liegenden Ausgangsplatten eine Dicke von 20 bis 50 mm und/oder eine Länge von 40 bis 80 mm besitzen.

42. Verfahren nach einem der Ansprüche 22 bis 41, **dadurch gekennzeichnet, daß** die Verbindungsselemente durch Ablängen von Profilsträngen oder Ausschneiden aus Platten gewonnen werden.

43. Verfahren nach einem der Ansprüche 22 bis 42, **dadurch gekennzeichnet, daß** maßhaltige Verbindungselemente in die Ausnehmungen eingesetzt werden oder vor dem seitlichen Bearbeiten der Ausgangsplatten die Verbindungselemente eingesetzt werden und die seitliche Bearbeitung der Platten anschließend erfolgt.

44. Verfahren nach einem der Ansprüche 22 bis 43, **gekennzeichnet durch** die Verwendung von Robotern zum Fräsen oder die Verwendung von Frässtationen mit Fräsen, die auf bzw. in Geradführungen und/oder Bogenführung bewegt werden.

45. Verfahren nach Anspruch 22 bis 44, **gekennzeichnet durch** die Verwendung mehrerer Fräser auf einer gemeinsamen Halterung und/oder mit gemeinsamer Steuerung und/oder mit gemeinsamem Antrieb.

46. Verfahren nach Anspruch 22 bis 45, **gekennzeichnet durch** die Verwendung eines Fräsers mit einem Schwenkkopf mit zusätzlicher Schwenkbeweglichkeit zur Umstellung auf unterschiedlich geneigte Ausnehmungen.

47. Verfahren nach einem oder mehreren der Ansprüche 22 bis 46, **gekennzeichnet durch** Fräser, die mit den Platten mitbewegt werden, oder **durch** ortsfeste Frässtationen, in denen die Platten ruhen.

48. Verfahren nach einem der Ansprüche 22 bis 47, **gekennzeichnet durch** die Verwendung von Führungen die **durch** Gleitschlitten und/oder Schwenklager gebildet werden.

49. Verfahren nach einem der Ansprüche 1 bis 48, **gekennzeichnet durch** die Verwendung von Ausgangsplatten, die bei liegender Kunststoffschaumplatte an der Oberseite und der Unterseite eine Schäumhaut besitzen und an der Berührungsfläche oberflächenbearbeitet sind.

50. Verfahren nach einem der Ansprüche 1 bis 49, **gekennzeichnet durch** die Verwendung von Schaumplatten aus Polystyrol, Polyethylen, Polypropylen, Ethylen, Propylencopolymere.

## Claims

1. Process for joining at least two starting materials consisting of boards of thermoplastic foamed plastic to make one new board, in particular for starting materials consisting of synthetic foamed boards made with an alternative blowing agent or a HCFC-free (hydrochlorofluorocarbon-free) blowing agent, to produce new boards with a minimum thickness of 70 mm, particularly also polystyrene foamed boards, **characterised in that**
a) starting material boards are used that are devoid of extrusion skin on the contact surface and
b) a joining of the starting material boards is carried out using solvent welding.

2. Process according to Claim 1, **characterised by** the use of organic solvents for the solvent welding, with a boiling point of less than 150°C for the solvent welding.

3. Process according to Claim 1 or 2, **characterised by** the use of acetone as the solvent.

4. Process according to one of Claims 1 to 3, **characterised by** solvent mixtures.

5. Process according to Claim 4, **characterised by** the use of a mixture with water.

6. Process according to one of Claims 1 to 5, **characterised by** spraying the solvent on or by the use of rollers or plates to imprint the solvent.

7. Process according to Claim 6, **characterised by** an additional mechanical joining of the boards.

8. Process according to one of Claims 1 to 7, **characterised in that** starting boards are used where the aligned welding surfaces run horizontally or bent to one another, wherein the alignment of the welding surfaces is produced
a) by a mechanical process and/or
b) by heat treatment and/or
c) by pressure and/or bending of the correspondent other surfaces of the starting boards.

9. Process according to one of Claims 1 to 8, **characterised in that** the boards' solvent treated - welding sides are pressed together.

10. Process according to one of Claims 1 to 9, **characterised in that** extruded foamed strands are welded to one another to form a new strand, which is cut into boards.

11. Process according to one of Claims 1 to 10, **characterised by** a surface treatment of the starting boards by routing or planing or cutting or sawing.

12. Process according to one of Claims 1 to 11, **characterised by** the manufacture of all required new boards by combining starting boards with a thickness of 30 to 70 mm, preferably by combining 40 mm starting boards and 50 mm starting boards and 60 mm starting boards.

13. Process according to one of Claims 1 to 12, **characterised by** offsetting the starting boards during the joining, so as to produce a tongue and groove joint or a protruding edge on the new board.

14. Process according to one of Claims 1 to 13, **characterised by** coating the starting boards with a solvent,
a) wherein the starting boards lie one behind the other, in two adjacent rows on a roller table or belt, and **characterised by** a subsequent elevation of the starting boards and pressing them together or
b) wherein the starting boards lie behind one another in a row on a roller table or conveyor belt or on a table and for each board a second board is taken from a pile and pressed onto its awaiting partner board or
c) wherein a starting board is taken from a pile and after the solvent application, is replaced onto the pile and pressed with its adhering side down and the resulting new board is placed on a new pile or
d) wherein two starting boards are simultaneously taken from a pile, or from two piles, and furnished with a coating of solvent and Joined together.

15. Process according to one of Claims 1 to 14, **characterised in that**
a) starting boards are used whose extrusion skin has been removed from both the opposite flat sides or
b) starting boards with extrusion skin are used, an extrusion skin having been removed from one flat side or
c) starting boards are used in the form of two foamed strands, whose extrusion skin is removed from one flat side and which are subsequently furnished with a solvent coating and joined together and then cut to length or
d) starting boards are used in the form of a foamed strand, whose extrusion skin is removed from one flat side and onto which is applied a solvent coating and joined to other prepared boards.

16. Process according to Claim 15, **characterised in that** starting boards are held during the removal of a foam skin and protected from warping.

17. Process according to Claim 16, **characterised in that** trimmed starting boards are taken from a pile and/or new boards are placed on a pile.

18. Process according to one of Claims 1 to 17, **characterised by** the use of one or more robots to move the boards and/or by the use of a table or a die chuck as holding means for the starting boards.

19. Process according to Claim 18, wherein the holding means for the starting boards are vacuum plates or suction cups.

20. Process according to one of Claims 1 to 19, **characterised by** the use of fixed devices for applying the solvent and/or fixed surface treatment tools when a robot is used for moving the boards.

21. Process according to one of Claims 1 to 20, **characterised by** tools being moved by means of robots.

22. Process according to one of Claims 1 to 21, **characterised by** the use of joining elements, which additionally join two or more plastic foamed boards to each other mechanically.

23. Process according to Claim 1, **characterised by** additional point source and/or lineal and/or surface joining of the boards.

24. Process according to Claim 22 or 23, **characterised in that** recesses are formed in the plastic foamed boards or in the starting boards, into which engage the joining elements and/or that the joining elements clasp.

25. Process according to Claim 24, **characterised in that** recesses are formed over the total width and/or length of the starting boards.

26. Process according to one of Claims 22 to 25, **characterised by** the use of lengthwise joining elements arranged at an angle or transverse to the plastic foamed boards.

27. Process according to one of Claims 22 to 28, **characterised by** the use of rod-shaped, plate-shaped, or disk-shaped joining elements.

28. Process according to one of Claims 22 to 26, **characterised by** the use of joining elements, which exhibit a segment of a circle in the top view.

29. Process according to one of Claims 22 to 26, **characterised by** the use of joining elements, which exhibit a surface with different edge curvatures and/or straight edges and/or partly curved and partly straight edges in the top view.

30. Process according to one of Claims 22 to 29, **characterised in that** the recesses for the joining elements are introduced into the starting boards laid one on top of each other or singly into the starting boards.

31. Process according to one of Claims 22 to 30, **characterised in that** the recesses are introduced with a disk milling cutter or face cutter or end milling cutter, wherein the working direction of the cutter takes the same course as the joining elements.

32. Process according to one of Claims 31, **characterised in that** a disk milling cutter is used with the same radius as that of the segment of the circle.

33. Process according to one of Claims 22 to 32, **characterised in that** a disk milling cutter is used with a radius at most equal to that of the maximum outwardly facing curve found on the joining element.

34. Process according to one of Claims 22 to 33, **characterised by** the use of computer-controlled or template-driven cutters.

35. Process according to one of Claims 22 to 34, **characterised in that** a clamping of the joining element in the recesses is produced.

36. Process according to one of Claims 22 to 35, **characterised in that** for individual starting boards, the end milling cutter operates from the contact surface of the starting board into the board.

37. Process according to one of Claims 22 to 36, **characterised by** sticking in the joining elements and/or the use of joining elements with thickened ends.

38. Process according to one of Claims 22 to 37, **characterised by** the use of joining elements made from the same plastic foam, wherein the specific gravity of the starting board and the joining element differs by not more than 20 kg per cubic metre, preferably by not more than 5 kg per cubic metre.

39. Process according to one of Claims 22 to 38, **characterised by** the introduction of recesses into the sides of the boards which end before the upper side or the under side of the horizontal plastic foamed boards.

40. Process according to one of Claims 22 to 39, **characterised by** the introduction of recesses whose ends are at a distance of at least 10 mm from the upper side or the under side.

41. Process according to one of Claims 22 to 40, **characterised in that**
a) extruded boards are used as starting boards
b) the board thickness ranges from 40 to 60 mm
c) the joining elements for two starting boards lying one on top of each other have a thickness of 20 to 50 mm and/or a length of 40 to 80 mm.

42. Process according to one of Claims 22 to 41, **characterised in that** the Joining elements are obtained by cutting profile strands to length or by cutting out from boards.

43. Process according to one of Claims 22 to 42, **characterised in that** exactly sized joining elements are introduced into the recesses or introduced prior to the lateral machining of the starting boards and the lateral machining of the boards is subsequently carried out.

44. Process according to one of Claims 22 to 43, **characterised by** the use of robots for cutting or the use of cutting stations with cutters that are moved on or in straight lines and/or are sheet guided.

45. Process according to Claim 22 to 44, **characterised by** the use of a plurallty of cutters on a common mounting and/or with common control and/or with common actuation.

46. Process according to Claim 22 to 45, **characterised by** the use of a cutter with a swivel head with additional revolving mobility for conversion to differently inclined recesses.

47. Process according to one or more of Claims 22 to 46, **characterised by** cutters, which are moved together with the boards, or by fixed cutting stations in which the boards repose.

48. Process according to one of Claims 22 to 47, **characterised by** the use of guide mechanisms that are formed by sliding carriages and/or pivot bearings.

49. Process according to one of Claims 1 to 48, **characterised by** the use of starting boards, which have a foam skin on the upper side and under side of the plastic foamed board and are surface treated on the contact surface.

50. Process according to one of Claims 1 to 49, **characterised by** the use of foamed boards from polystyrene, polyethylene, polypropylene, ethylenepropylene copolymers.

## Revendications

1. Procédé pour relier au moins deux plaques initiales en matériau alvéolaire synthétique thermoplastique, pour former une nouvelle plaque, en particulier de plaques de matériau alvéolaire synthétique alternatives ou exemptes de HFCKW (hydrocarbures halogénés aliphatiques à haut point d'ébullition) en tant que plaques initiales, d'une épaisseur minimale de 70 mm, en particulier à partir de plaques en matériau alvéolaire de type polystyrène, **caractérisé en ce qu'**
a) on utilise des plaques initiales sans peau d'extrusion sur la surface de contact, et
b) on effectue une liaison des plaques initiales par soudage par gonflement.

2. Procédé selon la revendication 1, **caractérisé par** l'utilisation de solvants organiques pour effectuer le soudage par gonflement, avec un point d'ébullition inférieur à 150 Degrés Celsius pour le soudage par gonflement.

3. Procédé selon la revendication 1 ou 2, **caractérisé par** l'utilisation d'acétone en tant que solvant.

4. Procédé selon l'une des revendications 1 à 3, **caractérisé par** des mélanges de solvants.

5. Procédé selon la revendication 4, **caractérisé par** l'utilisation d'un mélange avec de l'eau.

6. Procédé selon l'une des revendications 1 à 5, **caractérisé par** l'aspersion du solvant ou par l'utilisation de rouleaux ou de plaques pour appliquer le solvant par pressage.

7. Procédé selon la revendication 6, **caractérisé par** une liaison mécanique supplémentaire des plaques.

8. Procédé selon l'une des revendications 1 à 7, **caractérisé en ce qu'**on utilise des plaques initiales, s'étendant de façon plane ou incurvée au niveau des faces de soudage adaptée les unes aux autres, l'adaptation des faces de soudage étant effectuée :
a) par usinage mécanique et/ou
b) par traitement thermique et/ou
c) par pressage et/ou cintrage ou pliage des autres faces de plaques initiales correspondantes.

9. Procédé selon l'une des revendications 1 à 8, **caractérisé en ce que** les plaques sont pressées les unes contre les autres sur les faces de soudage attachées par dissolution à l'aide d'un solvant.

10. Procédé selon l'une des revendications 1 à 9, **caractérisé en ce que** des tronçons de matière alvéolaire extrudés sont soudés ensemble, de manière à produire un nouveau tronçon, découpé à la longueur pour former des plaques.

11. Procédé selon l'une des revendications 1 à 10, **caractérisé par** un usinage de surface des plaques initiales par un fraisage ou un rabotage, ou un découpage ou un sciage.

12. Procédé selon l'une des revendications 1 à 11, **caractérisé par** la fabrication de toutes les nouvelles plaques souhaitées par une combinaison de plaques initiales d'une épaisseur de 30 à 70 mm, de préférence par combinaison de plaques initiales de 40 mm et de plaques initiales de 50 mm et de plaques initiales de 60 mm.

13. Procédé selon l'une des revendications 1 à 12, **caractérisé par** un décalage des plaques initiales lors de la liaison, afin de produire une rainure et une languette, ou une feuillure échelonnée sur les nouvelles plaques.

14. Procédé selon l'une des revendications 1 à 13, **caractérisé par** une application de solvants sur les plaques initiales,
a) les plaques initiales, disposées en deux rangées situées l'une à côté de l'autre, étant placées l'une derrière l'autre sur un transporteur à rouleau ou une bande, et **caractérisé par** un dressage subséquent des plaques initiales et leur pressage ensemble, ou
b) les plaques initiales, disposées l'une derrière l'autre en une rangée, étant posées sur un transporteur à rouleau ou sur une bande transporteuse ou sur une table et, pour chacune des plaques, une deuxième plaque étant prise d'une pile et pressée sur la plaque horizontale afférente, ou
c) une plaque initiale étant prise d'une pile et, après application d'un solvant, étant replacée, la face collante sur la pile, et pressée et la nouvelle plaque créée étant posée sur une nouvelle pile, ou
d) simultanément, deux plaques initiales sont prises d'une pile ou de deux piles, reçoivent une application de solvant et sont reliées ensemble.

15. Procédé selon l'une des revendications 1 à 14, **caractérisé en ce qu'**
a) on utilise des plaques initiales, dont la peau d'extrusion est enlevée sur deux faces opposées, ou
b) on utilise des plaques initiales ayant une peau d'extrusion, dont la peau d'extrusion est enlevée sur une face plate, ou
a) on utilise des plaques initiales ayant la forme de deux tronçons alvéolaires, dont la peau d'extrusion est enlevée sur une face plate et qui reçoivent ensuite une application de solvant et sont reliées ensemble et ensuite découpées à longueur, ou
b) on utilise des plaques initiales ayant la forme d'un tronçon alvéolaire, dont la peau d'extrusion est enlevée sur une face plate et qui reçoivent à cet endroit ensuite une application de solvant et sont reliées à d'autres plaques préparées.

16. Procédé selon la revendication 15, **caractérisé en ce que** des plaques initiales sont maintenues lors de l'enlèvement d'une peau alvéolaire et protégées contre un phénomène de courbure.

17. Procédé selon la revendication 16, **caractérisé en ce que** les plaques initiales découpées à longueur sont prises d'une pile et/ou de nouvelles plaques sont déposées sur une pile.

18. Procédé selon l'une des revendications 1 à 17, **caractérisé par** l'utilisation d'un ou plusieurs robots pour le déplacement des plaques et/ou par l'utilisation d'une table ou d'un mandrin de serrage, en tant que dispositifs de maintien pour les plaques initiales.

19. Procédé selon la revendication 18, **caractérisé par** des plaques à vide ou des ventouses, faisant office de dispositifs de maintien pour les plaques initiales.

20. Procédé selon l'une des revendications 1 à 19, **caractérisé par** l'utilisation de dispositifs applicateurs de solvants localement fixes et/ou d'outils d'usinage de surfaces localement fixes, en cas d'utilisation d'un robot pour déplacer les plaques.

21. Procédé selon l'une des revendications 1 à 20, **caractérisé par** un déplacement d'outil, effectué au moyen d'un robot.

22. Procédé selon l'une des revendications 1 à 21, **caractérisé par** l'utilisation d'éléments de liaison, les deux plaques de matériau alvéolaire ou plus étant reliés ensemble, en plus, mécaniquement.

23. Procédé selon la revendication 1, **caractérisé par** une liaison supplémentaire, ponctuelle et/ou linéaire et/ou de surface, des plaques.

24. Procédé selon la revendication 22 ou 23, **caractérisé en ce que**, dans les plaques de matériau alvéolaire synthétique, ou dans les plaques initiales, sont creusés par usinage des évidements dans lesquels les éléments de liaison s'engagent et/ou **en ce que** les éléments de liaison entourent les plaques.

25. Procédé selon la revendication 24, **caractérisé en ce que** les évidements sont creusés sur l'ensemble de la largeur et/ou de la longueur des plaques.

26. Procédé selon l'une des revendications 22 à 26, **caractérisé par** l'utilisation d'éléments de liaison allongés, ayant un agencement incliné ou un agencement transversal par rapport aux plaques en matériau alvéolaire synthétique.

27. Procédé selon l'une des revendications 22 à 26, **caractérisé par** l'utilisation d'éléments de liaison en forme de barre et/ou en forme de plaque et/ou en forme de disque.

28. Procédé selon l'une des revendications 22 à 26, **caractérisé par** l'utilisation d'éléments de liaison ayant une section transversale circulaire, observée en vue de dessus.

29. Procédé selon l'une des revendications 22 à 26, **caractérisé par** l'utilisation d'éléments de liaison qui, observés en vue de dessus, présentent une surface à courbure en bordure différente et/ou une allure en bordure rectiligne et/ou une allure en bordure partiellement incurvée et partiellement rectiligne.

30. Procédé selon l'une des revendications 22 à 29, **caractérisé en ce que** les évidements prévus pour les éléments de liaison sont usinés dans les plaques initiales ayant été placées les unes sur les autres, ou usinés individuellement dans les plaques initiales.

31. Procédé selon l'une des revendications 22 à 30, **caractérisé en ce que** les évidements sont usinés avec une fraise-disque ou fraise-scie, ou une fraise en bout ou une fraise à queue, la direction de travail de la fraise étant celle des éléments de liaison.

32. Procédé selon l'une des revendications 22 à 31, **caractérisé en ce qu'**on utilise une fraise-disque, d'un rayon égal au rayon du tronçon circulaire.

33. Procédé selon l'une des revendications 22 à 32, **caractérisé en ce qu'**on utilise une fraise-disque dont le rayon est au plus égal à la courbure maximale, orientée vers l'extérieur, se produisant sur l'élément de liaison.

34. Procédé selon l'une des revendications 22 à 33, **caractérisé par** l'utilisation de fraises à commande informatique ou à commande par gabarit.

35. Procédé selon l'une des revendications 22 à 34, **caractérisé en ce qu'**un serrage des éléments de liaison dans les évidements est produit.

36. Procédé selon l'une des revendications 22 à 35, **caractérisé en ce que**, lorsque les plaques initiales sont placées individuellement, la fraise à queue travaille depuis la surface de contact des plaques initiales en pénétrant dans la plaque.

37. Procédé selon l'une des revendications 22 à 36, **caractérisé par** le collage dans la masse des éléments de liaison et/ou l'utilisation d'éléments de liaison ayant des extrémités épaissies.

38. Procédé selon l'une des revendications 22 à 37, **caractérisé par** l'utilisation d'éléments de liaison formés du même matériau alvéolaire synthétique, la différence entre la masse volumique des plaques initiales et celle des éléments de liaison n'étant pas supérieure à 20 kg par mètre cube, de préférence pas supérieure à 5 kg par mètre cube

39. Procédé selon l'une des revendications 22 à 38, **caractérisé par** l'usinage, dans les faces de plaque, d'évidements s'achevant avant la face supérieure ou la face inférieure de la plaque en matériau alvéolaire synthétique horizontale.

40. Procédé selon l'une des revendications 22 à 39, **caractérisé par** l'usinage d'évidements, dont les extrémités sont à une distance d'au moins 10 mm de la face supérieure ou de la face inférieure.

41. Procédé selon l'une des revendications 22 à 40, **caractérisé en ce qu'**
a) on utilise des plaques extrudées en tant que plaques initiales,
b) l'épaisseur de plaque est de 40 à 60 mm,
c) lorsqu'on a deux plaques initiales placées l'une au-dessus de l'autre, les éléments de liaison ont une épaisseur de 20 à 50 mm et/ou une longueur de 40 à 80 mm.

42. Procédé selon l'une des revendications 22 à 41, **caractérisé en ce que** les éléments de liaison sont obtenus par découpage à la longueur de tronçons profilés, ou par découpage à partir de plaques.

43. Procédé selon l'une des revendications 22 à 42, **caractérisé en ce que** l'on insère dans les évidements des éléments de liaison, présentant une exactitude dimensionnelle, ou l'on insère les éléments de liaison, avant l'usinage latéral des plaques initiales, et on effectue ensuite l'usinage latéral des plaques.

44. Procédé selon l'une des revendications 22 à 43, **caractérisé par** l'utilisation de robots pour le fraisage, ou par l'utilisation de postes de fraisage munis de fraises, déplacées sur ou dans des guidages rectilignes et/ou un guidage arqué.

45. Procédé selon les revendications 22 à 44, **caractérisé par** l'utilisation de plusieurs fraises, sur une fixation commune et/ou avec une commande commune et/ou avec un entraînement commun.

46. Procédé selon les revendications 22 à 45, **caractérisé par** l'utilisation d'une fraise avec une tête pivotante, présentant une mobilité en pivotement supplémentaire pour le réglage sur des évidements d'inclinaison différente.

47. Procédé selon l'une ou plusieurs des revendications 22 à 46, **caractérisé par** des fraises, déplacées conjointement avec les plaques, ou par des postes de fraisage localement fixes, dans lesquels les plaques sont stationnaires.

48. Procédé selon l'une des revendications 22 à 47, **caractérisé par** l'utilisation de guidages, formés par des chariots coulissants et/ou des paliers de pivotement.

49. Procédé selon l'une des revendications 1 à 48, **caractérisé par** l'utilisation de plaques initiales qui, lorsque la plaque en matériau alvéolaire synthétique est horizontale, ont, en face supérieure et en face inférieure, une peau alvéolaire et sont soumises à un usinage de la surface au niveau de la face de contact.

50. Procédé selon l'une des revendications 1 à 49, **caractérisé par** l'utilisation de plaques en matériau alvéolaire, en polystyrène, polyéthylène, polypropylène, éthylène, copolymère de propylène.
